# EUROPÄISCHE PATENTSCHRIFT

(11) **EP 1 720 923 B1**
(45) Veröffentlichungstag und Bekanntmachung des Hinweises auf die Patenterteilung: **18.03.2015**
(21) Anmeldenummer: 05707892.5
(22) Anmeldetag: 26.01.2005
(51) Int. Cl.: C08G 18/08, C08G 18/62, C09D 175/04

(54) **MEHRKOMPONENTENSYSTEME, VERFAHREN ZU IHRER HERSTELLUNG UND IHRE VERWENDUNG**
MULTICOMPONENT SYSTEMS, METHOD FOR PRODUCING THE SAME AND USE THEREOF
SYSTEMES A PLUSIEURS CONSTITUANTS, PROCEDE POUR PRODUIRE CES SYSTEMES ET LEUR UTILISATION

(30) Priorität: 26.02.2004 DE 102004009282
(43) Veröffentlichungstag der Anmeldung: 15.11.2006
(73) Patentinhaber: BASF Coatings GmbH, 48165 Münster (DE)
(72) Erfinder: LETTMANN, Bernhard, 48317 Drensteinfurt (DE); NIENHAUS, Egbert, 59387 Ascheberg (DE)
(74) Vertreter: Leifert & Steffan
(86) Internationale Anmeldenummer: PCT/EP2005/050385
(87) Internationale Veröffentlichungsnummer: WO 2005/082965

(56) Entgegenhaltungen:
- EP-B- 1 056 786
- WO-A-01/98390
- WO-A-98/38230

## Beschreibung

Die vorliegende Erfindung betrifft neue Mehrkomponentensysteme. Außerdem betrifft die vorliegende Erfindung ein neues Verfahren zur Herstellung von Mehrkomponentensystemen. Des Weiteren betrifft die vorliegende Erfindung die Verwendung der neue Mehrkomponentensysteme und der nach dem neuen Verfahren hergestellten Mehrkomponentensysteme für die Herstellung von thermisch oder thermisch und mit aktinischer Strahlung härtbaren Öl-in-Wasser-Dispersionen. Nicht zuletzt betrifft die vorliegende Erfindung die Verwendung der thermisch und mit aktinischer Strahlung härtbaren Öl-in-Wasser-Dispersionen als Beschichtungsstoffe, Klebstoffe und Dichtungsmassen für die Herstellung von Beschichtungen, Klebschichten und Dichtungen.

Wässrige Mehrkomponentensysteme zur Herstellung thermisch oder thermisch und mit aktinischer Strahlung härtbarer Öl-in-Wasser-Dispersionen, die mindestens die folgenden Komponenten enthalten oder hieraus bestehen:
(I') mindestens eine wasserfreie, flüssige Komponente, die mindestens ein wasserlösliches und/oder wasserdispergierbares, oligomeres und/oder polymeres Bindemittel (A) mit mindestens zwei isocyanatreaktiven funktionellen Gruppen in mindestens einem organischen Lösemittel gelöst und/oder dispergiert enthält;
(II) mindestens eine wasserfreie, flüssige Komponente, die mindestens ein Polyisocyanat (B) enthält oder hieraus besteht; und
(III) Wasser oder mindestens eine wässrige Komponente, die mindestens ein Bindemittel (A) in Wasser dispergiert und/oder gelöst enthält;
sind aus dem amerikanische Patent US 5,466,754 A1, der internationalen Patentanmeldung WO 97/14731 A1, den deutschen Patentanmeldungen DE 44 21 823 A1, DE 198 55 125 A1, DE 198 55 167 A1, DE 199 14 899 A1 oder DE 199 04 317 A1 oder dem europäischen Patent EP 1 056 786 B1 bekannt.

Bekanntermaßen werden zur Herstellung der entsprechenden thermisch oder thermisch und mit aktinischer Strahlung härtbaren Öl-in-Wasser-Dispersionen mindestens eine Komponente (I'), mindestens eine Komponente (II) und mindestens eine Komponente (III) miteinander vermischt. Üblicherweise werden dabei zuerst die wasserfreien, flüssigen Komponenten (I') und (II) miteinander vermischt, wonach die resultierende Mischung (I'/II) mit der wässrigen Komponente (III) vereinigt wird. Die resultierenden härtbaren Öl-in-Wasser-Dispersionen werden insbesondere als Beschichtungsstoffe, Klebstoffe und Dichtungsmassen für die Herstellung von Beschichtungen, Klebschichten und Dichtungen verwendet.

Dabei ist aus den Vergleichsversuchen der internationalen Patentanmeldung WO 97/14731 A1 noch ein Verfahren bekannt, bei dem man zunächst die mindestens ein Bindemittel (A) enthaltende Komponente (III) mit der wasserfreien Komponente (I') vermischt, sodass eine wässrig-organische Komponente (I'/III) resultiert, die aber auf Grund ihres hohen Wassergehalts keine Wasser-in-ÖI-Dispersion ist. Die wässrig-organische Komponente (I'/III) wird anschließend mit der Komponente (II) vermischt. Die wässrig-organische Komponente (I'/III) und die Komponente (II) bilden somit ein Zweikomponentensystem. Die resultierenden wässrigen, thermisch härtbaren Mischungen liefern aber Klarlackierungen, die Trübungen, Grauschleier und einen schlechten Verlauf aufweisen (vgl. WO 97/14731 A1, Seite 58, Tabelle 1).

Des Weiteren ist aus den Vergleichsversuchen »Comparative Examples 1 und 2«, Spalte 11, Zeile 62, bis Spalte 13, Zeile 21, der US 5,466,754 A1 (mit direktem Verweis auf das amerikanische Patent US 5,075,370 A1) ein Dreikomponentensystem bekannt, das eine wässrige Dispersion oder Lösung des Bindemittels (A) als Komponente (I") - also eine Öl-in-Wasser-Dispersion - sowie die Komponenten (II) und (III) umfasst. Allerdings liefert dieses Dreikomponentensystem wässrige, thermisch härtbare Mischungen, die inhomogen und trübe sind und nach dem Rühren eine Phasentrennung erleiden oder die instabil sind und bereits nach 1 bis 2 Stunden Niederschläge bilden.

Aus der internationalen Patentanmeldung WO 98/38230 A1 ist ein Dreikomponentensystem bekannt, das eine wässrig-organische Komponente (I") mit einem Wassergehalt von 40 Gew.-% sowie die Komponenten (II) und (III) umfasst Aufgrund ihres hohen Wassergehalts ist die wässrig-organische Komponente (I") keine Wasser-in-Öl-Dispersion (I). Zur Herstellung thermisch härtbarer Öl-in-Wasser-Dispersionen wird die Komponente (I") mit der Komponente (II) vermischt, sodass erst in dieser Verfahrensstufe eine Wasser-in-ÖI-Dispersion resultiert. Die Wasser-in-Öl-Dispersion wird mit Wasser weiter verdünnt, sodass eine Öl-in-Wasser-Dispersion resultiert. Nach den Angaben der internationalen Patentanmeldung ist diese stabil, hat eine vergleichsweise lange Verarbeitungszeit und weist einen vergleichsweise niedrigen Gehalt an flüchtigen organischen Verbindungen (VOC) auf. Sie soll Beschichtungen, insbesondere Klarlackierungen, von hoher Klarheit und hohem Glanz, die nur wenige oder keine Mikrobläschen aufweisen, liefern.

Bei der Herstellung der bekannten wässrigen, thermisch härtbaren Mischungen aus den bekannten Mehrkomponentensystemen müssen bei dem Vermischen der Komponenten (I') bis (III) und dem Homogenisieren der resultierenden Mischungen vergleichsweise hohe Scherkräfte eingesetzt werden, sodass die Verfahren nur mit Hilfe von Mischaggregaten wie Rührer oder Dissolver durchgeführt werden können. Für die Reparaturlackierung, insbesondere die Autoreparaturlackierung, müssen aber auch vergleichsweise geringe Mengen an thermisch oder thermisch und mit aktinischer Strahlung härtbaren Öl-in-Wasser-Dispersionen aus Mehrkomponentensystemen per Hand hergestellt werden können. Dies ist aber bei den bekannten Mehrkomponentensystemen nicht oder nicht in dem notwendigen Maße möglich.

Aufgabe der vorliegenden Erfindung ist es, neue Mehrkomponentensysteme bereitzustellen, die die Nachteile des Standes der Technik nicht mehr länger aufweisen, sondern die sich einfach herstellen lassen und die es gestatten, thermisch oder thermisch und mit aktinischer Strahlung härtbare Öl-in-Wasser-Dispersionen aus mehreren Komponenten durch Vermischen per Hand problemlos und sehr gut reproduzierbar herzustellen.

Die resultierenden thermisch oder thermisch und mit aktinischer Strahlung härtbaren Öl-in-Wasser-Dispersionen sollen stabil sein, eine praxisgerechte Verarbeitungszeit oder Topfzeit von mehreren Stunden aufweisen und sich vor allem hervorragend als Beschichtungsstoffe, insbesondere Klarlacke, Klebstoffe und Dichtungsmassen einsetzen lassen.

Die Beschichtungsstoffe, insbesondere die Klariacke, sollen Beschichtungen, insbesondere Klarlackierungen, von hohem Glanz, hoher Klarheit, hoher Transparenz, sehr gutem Verlauf und völliger oder weitgehender Freiheit von Oberflächenstörungen liefern.

Die Klebstoffe sollen Klebschichten liefern, die Substrate auch unter schwierigen und/oder rasch zwischen Extremen wechselnden klimatischen Bedingungen auf Dauer miteinander verbinden.

Die Dichtungsmassen sollen Dichtungen liefern, die auch unter schwierigen und/oder rasch zwischen Extremen wechselnden Bedingungen und bei höheren Drücken in der Lage sind, auch gegenüber aggressiven Chemikalien auf Dauer abzudichten.

Demgemäß wurden die neuen Mehrkomponentensysteme gefunden, die mindestens die folgenden Komponenten enthalten oder hieraus bestehen:
(I) mindestens eine Wasser-in-Öl-Dispersion, die Wasser und mindestens ein wasserlösliches und/oder wasserdispergierbares, oligomeres und/oder polymeres Bindemittel (A) mit mindestens zwei isocyanatreaktiven funktionellen Gruppen in mindestens einem organischen Lösemittel gelöst und/oder dispergiert enthält;
(II) mindestens eine wasserfreie, flüssige Komponente, die mindestens ein Polyisocyanat (B) enthält oder hieraus besteht; und
(III) Wasser oder mindestens eine wässrige Komponente, die mindestens ein Bindemittel (A) in Wasser dispergiert und/oder gelöst enthält.

Im Folgenden werden die neuen Mehrkomponentensysteme als »erfindungsgemäße Mehrkomponentensysteme« bezeichnet.

Außerdem wurde ein neues Verfahren zur Herstellung der erfindungsgemäßen Mehrkomponentensysteme aus Mehrkomponentensystemen, die zumindest
(I') mindestens eine wasserfreie, flüssigeKomponente, die mindestens ein wasserlösliches und/oder wasserdispergierbares, oligomeres und/oder polymeres Bindemittel (A) mit mindestens zwei isocyanatreaktiven funktionellen Gruppen in mindestens einem organischen Lösemittel gelöst und/oder dispergiert enthält;
(II) mindestens eine wasserfreie, flüssige Komponente, die mindestens ein Polyisocyanat (B) enthält oder hieraus besteht; und
(III) Wasser oder mindestens eine wässrige Komponente, die mindestens ein Bindemittel (A) in Wasser dispergiert und/oder gelöst enthält;
umfassen, gefunden, bei dem ein Teil mindestens einer Komponente (III) mit mindestens einer Komponente (I') vermischt wird, sodass mindestens eine Wasser-in-Öl-Dispersion (I) resultiert und das im Folgenden als »erfindungsgemäßes Verfahren 1« bezeichnet wird.

Des Weiteren wurde das neue Verfahren zur Herstellung thermisch oder thermisch und mit aktinischer Strahlung härtbarer Öl-in-Wasser Dispersionen gefunden, bei dem ein Mehrkomponentensystem, das mindestens die folgenden Komponenten enthält oder hieraus besteht:
(I') mindestens eine wasserfreie, flüssige Komponente, die mindestens ein wasserlösliches und/oder wasserdispergierbares, oligomeres und/oder polymeres Bindemittel (A) mit mindestens zwei isocyanatreaktiven funktionellen Gruppen in mindestens einem organischen Lösemittel gelöst und/oder dispergiert enthält;
(II) mindestens eine wasserfreie, flüssige Komponente, die mindestens ein Polyisocyanat (B) enthält oder hieraus besteht; und
(III) Wasser oder mindestens eine wässrige Komponente, die mindestens ein Bindemittel (A) in Wasser dispergiert und/oder gelöst enthält;
verwendet wird, wobei mindestens eine Komponente (I'), mindestens eine Komponente (II) und mindestens eine Komponente (III) miteinander vermischt werden und wobei
(1) ein Teil mindestens einer Komponente (III) mit mindestens einer Komponente (I') vermischt wird, sodass mindestens eine Wasser-in-Öl-Dispersion (I) resultiert,
(2) die Wasser -in-Öl-Dispersion(en) (I) mit mindestens einer Komponente (II) vermischt wird oder werden und
(3) die resultierende(n) Mischung(en) (I/II) mit Wasser oder mindestens einer Komponente (III) vermischt wird oder werden, sodass mindestens eine Öl-in-Wasser-Dispersion resultiert.

Im Folgenden wird das neue Verfahren zur Herstellung thermisch oder thermisch und mit aktinischer Strahlung härtbarer Öl-in-Wasser-Dispersionen als »erfindungsgemäßes Verfahren 2« bezeichnet

Außerdem wurde die neue Verwendung der erfindungsgemäßen Mehrkomponentensysteme und der mit Hilfe des erfindungsgemäßen Verfahrens 1 hergestellten erfindungsgemäßen Mehrkomponentensysteme sowie des erfindungsgemäßen Verfahrens 2 für die Herstellung von thermisch oder thermisch und mit aktinischer Strahlung härtbaren Öl-in-Wasser-Dispersionen gefunden.

Des Weiteren wurde die neue Verwendung
- der aus den erfindungsgemäßen Mehrkomponentensystemen hergestellten thermisch oder thermisch und mit aktinischer Strahlung härtbaren Öl-in-Wasser-Dispersionen,
- der aus den mit Hilfe des erfindungsgemäßen Verfahrens 1 hergestellten erfindungsgemäßen Mehrkomponentensystemen gewonnenen thermisch oder thermisch und mit aktinischer Strahlung härtbaren Öl-in-Wasser-Dispersionen sowie
- der mit Hilfe des erfindungsgemäßen Verfahrens 2 hergestellten thermisch oder thermisch und mit aktinischer Strahlung härtbaren Öl-in-Wasser-Dispersionen
als Beschichtungsstoffe, Klebstoffe und Dichtungsmassen zur Herstellung von Beschichtungen, Klebschichten und Dichtungen gefunden.

Im Hinblick auf den Stand der Technik war es überraschend und für den Fachmann nicht vorhersehbar, dass die Aufgabe, die der vorliegenden Erfindung zugrunde lag, mit Hilfe der erfindungsgemäßen Mehrkomponentensysteme, des erfindungsgemäßen Verfahrens 1 und des erfindungsgemäßen Verfahrens 2 gelöst werden konnte.

Insbesondere war es überraschend, dass die erfindungsgemäßen Mehrkomponentensysteme die Nachteile des Standes der Technik nicht mehr länger aufwiesen, sondern sich mit Hilfe des erfindungsgemäßen Verfahrens 1 in einfacher Weise und hervorragend reproduzierbar herstellen ließen.

Darüber hinaus gestatteten es die erfindungsgemäßen Mehrkomponentensysteme und die mit Hilfe des erfindungsgemäßen Verfahrens 1 hergestellten Mehrkomponentensysteme, thermisch oder thermisch und mit aktinischer Strahlung härtbare Öl-in-Wasser-Dispersionen aus den Komponenten (I) bis (III) durch Vermischen per Hand problemlos und hervorragend reproduzierbar herzustellen.

Nicht zuletzt gestattete es das erfindungsgemäße Verfahren 2, thermisch oder thermisch und mit aktinischer Strahlung härtbare Öl-in-Wasser-Dispersionen aus den Komponenten (I') bis (III) durch Vermischen per Hand problemlos und hervorragend reproduzierbar herzustellen.

Die resultierenden thermisch oder thermisch und mit aktinischer Strahlung härtbaren Öl-in-Wasser-Dispersionen waren stabil, wiesen eine praxisgerechte Verarbeitungszeit oder Topfzeit von mehreren Stunden auf und konnten vor allem hervorragend als Beschichtungsstoffe, insbesondere Klarlacke, Klebstoffe und Dichtungsmassen eingesetzt werden.

Die Beschichtungsstoffe, insbesondere die Klarlacke, lieferten Beschichtungen, insbesondere Klarlackierungen, von hohem Glanz, hoher Klarheit, hoher Transparenz, sehr gutem Verlauf und völliger oder weitgehender Freiheit von Oberflächenstörungen.

Die Klebstoffe lieferten Klebschichten, die Substrate auch unter schwierigen und/oder rasch zwischen Extremen wechselnden klimatischen Bedingungen auf Dauer miteinander verbanden.

Die Dichtungsmassen lieferten Dichtungen, die auch unter schwierigen und/oder rasch zwischen Extremen wechselnden Bedingungen und bei höheren Drücken in der Lage waren, auch gegenüber aggressiven Chemikalien auf Dauer abzudichten.

Die erfindungsgemäßen Mehrkomponentensysteme umfassen zumindest die Komponenten (I) bis (III).

Darüber hinaus können sie mindestens eine weitere Komponente umfassen, wie beispielsweise die in der deutschen Patentanmeldung DE 199 04 317 A1, Seite 3, Zeilen 6, bis Seite 8, Zeile 10, im Detail beschriebene, feinteilige, feste Komponente (IV), die mindestens ein, insbesondere ein, gegebenenfalls wasserlösliches oder wasserdispergierbares, oligomeres und/oder polymeres Bindemittel (A) enthält oder hieraus besteht.

Die Komponenten (I) bis (III) sowie die gegebenenfalls vorhandenen weiteren Komponenten können auch in der Form eines Mischsystems oder Modulsystems (vgl. beispielsweise die deutsche Patentanmeldung DE 199 04 330 A1) bereitgestellt werden, das beispielsweise mehrere unterschiedliche pigmentierte Komponenten (I) als Basisfarben umfasst, so dass aus vergleichsweise wenigen Basisfarben mit Hilfe von Farbmischformeln Beschichtungsstoffe bereitgestellt werden können, die Beschichtungen mit den unterschiedlichsten Farbtönen und optischen Effekten liefern.

Die erfindungsgemäßen Mehrkomponentensysteme umfassen mindestens eine, insbesondere eine, Wasser-in-Öl-Dispersion (I) als Komponent(en) (I), die Wasser als disperse Phase und eine organische Phase als kontinuierliche Phase enthält. Gegebenenfalls können noch feinteilige, feste Partikel wie z. B. Pigmente als weitere disperse Phase vorhanden sein.

Der Wassergehalt der Wasser-in-Öl-Dispersionen (I) kann breit variieren; wesentlich ist, dass er unterhalb des Wassergehalts liegt, ab der es zu einer Phaseninversion kommt ("Wasserberg"). Die Lage des Wasserbergs wird auch durch die in der Wasser in-Öl-Dispersionen (I) enthaltenen Bestandteile, insbesondere die Bindemittel (A) und deren Neutralisationsgrad, beeinflusst. Im Allgemeinen kommt es zu keiner Phaseninversion wenn der Wassergehalt, insbesondere bei einem Neutralisationsgrad der nachstehend beschriebenen Bindemittel (A) > 50%, < 40, vorzugsweise < 30 und insbesondere < 20 Gew.-% ist.

Vorzugsweise liegt der Wassergehalt bei mindestens 5, bevorzugt mindestens 10 und insbesondere mindestens 15 Gew.-%.

Die Wasser-in-Öl-Dispersionen (I) enthalten außerdem mindestens ein wasserlösliches und/oder wasserdispergierbares, oligomeres und/oder polymeres Bindemittel (A) mit mindestens zwei, vorzugsweise mindestens drei und insbesondere mindestens vier isocyanatreaktiven funktionellen Gruppen in mindestens einem organischen Lösemittel gelöst und/oder dispergiert.

Beispiele geeigneter Bindemittel (A) zur Verwendung in den Wasser-in-Öl-Dispersionen bzw. den Komponenten (I) sind aus den deutschen Patentanmeldungen
- DE 44 21 823 A1, Seite 4, Zeile 4, bis Seite 11, Zeile 17;
- DE 198 55 125 A1, Seite 3, Seite 14, bis Seite 4, Zeile 1, sowie Seite 4, Zeile 2, bis Seite 11, Zeile 39;
- DE 198 55167 A1, Seite 3, Abs. [0032], bis Seite 12, Abs. [0121];
- DE 199 04 317 A1, Seite 3, Zeile 6, bis Seite 12, Zeile 19; oder
- DE 199 14 899 A1, Seite 3, Zeile 15, bis Seite 8, Zeile 32, sowie Seite 8, Zeile 32, bis Seite 17, Zeile 6;
den internationalen Patentanmeldungen
- WO 97/14731 A1, Seite 10, Zeile 30, bis Seite 36, Zeile 5; oder
- WO 98/38230 A1, Seite 10, Zeile 15, bis Seite 13, Zeile 20; oder
dem amerikanischen Patent
- US 5,466,745 A1, Spalte 5, Zeile 43, bis Spalte 7, Zeile 6;
bekannt.
Vorzugsweise enthalten die Wasser-in-Öl-Dispersionen (I) die Bindemittel (A) in den Mengen, wie sie in den deutschen Patentanmeldungen
- DE 44 21 823 A1, Seite 11, Zeilen 9 bis 17;
- DE 198 55 125 A1, Seite 12, Zeilen 23 bis 36;
- DE 198 55 167 A1, Seite 12, Abs. [0121];
- DE 199 04 317 A1, Seite 12, Zeilen 12 bis 19; oder
- DE 199 14 899 A1, Seite 16, Zeile 66, bis Seite 17, Zeile 6;
beschrieben werden.

Geeignet sind alle organischen Lösemittel, die unter den Bedingungen der Herstellung, der Lagerung und der weiteren Verarbeitung der Wasser-in-Öl-Dispersionen (I) nicht mit den Bindemitteln (A) oder mit Wasser reagieren. Bezüglich der Polyisocyanate der nachstehend beschriebenen Komponente (II) können die organischen Lösemittel inert oder reaktiv sein. Außerdem können sie reaktiv i. S. einer Teilnahme an der Härtung mit aktinischer Strahlung sein. Sind sie reaktiv, handelt es sich um so genannte Reaktiwerdünner. Beispiele geeigneter organischer Lösemittel sind aus den deutschen Patentanmeldungen DE 199 14 899 A1, Seite 17, Zeilen 23 bis 33, i. V. m. Seite 11, Zeile 47, bis Seite 12, Zeile 8, oder DE 101 29 970 A1, Seite 11, Abs. [0102] mit Verweis auf die deutsche Patentanmeldung DE 198 18 735 A1, Spalte 7, Zeilen 1 bis 25, bekannt. Vorzugsweise sind die organischen Lösemittel wasserverdünnbar.

Ansonsten können die Wasser-in-Öl-Dispersionen oder Komponenten (I) übliche und bekannte Zusatzstoffe, wie Neutralisationsmittel; physikalisch härtbare Bindemittel, die von den vorstehend beschriebenen Bindemitteln (A) verschieden sind; Pigmente; molekulardispers lösliche Farbstoffe; Lichtschutzmittel, wie UV-Absorber und reversible Radikalfänger (HALS); Antioxidantien; Netzmittel; Emulgatoren; Slipadditive; Polymerisationsinhibitoren; Katalysatoren für die thermische Vernetzung; thermolabile radikalische Initiatoren; Photoinitiatoren und -coinitiatoren; Haftvermittler; Verlaufmittel; filmbildende Hilfsmittel; Rheologiehilfsmittel oder rheologiesteuernde Additive (Verdicker und strukturviskose Sag control agents, SCA); Flammschutzmittel; Korrosionsinhibitoren; Wachse; Sikkative; Biozide und/oder Mattierungsmittel; in wirksamen Mengen enthalten. Weitere Beispiele geeigneter Zusatzstoffe werden in den deutschen Patentanmeldungen
- DE 44 21 823 A1, Seite 11, Zeilen 18 bis 30, und Seite 11, Zeile 35 bis Seite 12, Zeile 3;
- DE 199 14 899 A1, Seite 17, Zeilen 35 bis 43, Seite 17, Zeile 39, bis Seite 18, Zeile 37, und Seite 19, Zeilen 10 bis 66;
- DE 101 29 970 A1, Seite 11, Abs. [0106], bis Seite 12, Abs. [0121], sowie Seite 12, Abs. [0123]; oder in dem
- Lehrbuch »Lackadditive« von Johan Bieleman, Wiley-VCH, Weinheim, New York, 1998,
beschrieben.

Die wasserfreien, flüssigen Komponenten (II) enthalten mindestens ein, insbesondere ein, Polyisocyanat (B). Die Polyisocyanate (B) können auch reaktive funktionelle Gruppen enthalten, die mit aktinischer Strahlung aktivierbar sind und so an der Härtung mit aktinischer Strahlung teilnehmen können. Solche Polyisocyanate (B) werden im Folgenden als »Dual-Cure-Polyisocyanate (B)« bezeichnet.

Die flüssigen Komponenten (II) sind wasserfrei. D. h., dass sie kein Wasser oder nur Spuren von Wasser, die bei der Herstellung und/oder der Handhabung der Komponenten (II) unbeabsichtigt eingeschleppt werden, enthalten.

Beispiele geeigneter Polyisocyanate (B) zur Verwendung in den Komponenten (II) sind aus den deutschen Patentanmeldungen
- DE 44 21 823 A1, Seite 12, Zeilen 4 bis 35; oder
- DE 199 14 899 A1, Seite 18, Zeile 40, bis Seite 19, Zeilen 9, und Seite 19, Zeile 67, bis Seite 20, Zeile 12;
bekannt.

Beispiele geeigneter Dual-Cure-Polyisocyanate (B) zur Verwendung in den Komponenten (II) sind aus der deutschen Patentanmeldung DE 101 29 970 A1, Seite 2, Abs. [0008] mit Verweis auf die europäische Patentanmeldung EP 0 928 800, sowie Seite 6, Abs. [0042], bis Seite 11, Abs. [0099], bekannt.

Außer den vorstehend beschriebenen Polyisocyanaten (B) können die Komponenten (II) die vorstehend beschriebenen organischen Lösemittel, vorzugsweise die inerten, wasserverdünnbaren Lösemittel, sonstige Vernetzungsmittel, die keine freie Isocyanatgruppen enthalten, wie beispielsweise die in der deutschen Patentanmeldung DE 199 14 899 A1, Seite 19, Zeilen 10 bis 66 beschriebenen Vernetzungsmittel, und/oder die vorstehend beschriebenen Zusatzstoffe, vorzugsweise Zusatzstoffe, die keine isocyanatreaktiven funktionellen Gruppen aufweisen, enthalten.

Bei den Komponenten (III) handelt es sich um Wasser, vorzugsweise deionisiertes Wasser. Das Wasser kann wirksame Mengen der vorstehend beschriebenen Zusatzstoffe (vgl. die deutsche Patentanmeldung DE 44 21 823 A1, Seite 12, Zeile 63, bis Seite 13, Zeile 3), insbesondere Rheologiehilfsmittel oder rheologiesteuernde Additive, enthalten.

Die Komponenten (III) können auch wässrige Komponenten (III) sein, die mindestens eines der vorstehend beschriebenen Bindemittel (A) in Wasser dispergiert und/oder gelöst enthalten. Vorzugsweise enthalten diese wässrigen Komponenten (III) mindestens einen der vorstehend beschriebenen Zusatzstoffe (vgl. auch die internationale Patentanmeldung WO 97/14731 A1, Seite 43, Zeile 18, bis Seite 46, Zeile 30), insbesondere ein Rheologiehilfsmittel oder rheologiesteuemdes Additiv.

Vorzugsweise werden die erfindungsgemäßen Mehrkomponentensysteme mit Hilfe des erfindungsgemäßen Verfahrens 1 hergestellt.

Erfindungsgemäß wird dabei von Mehrkomponentensystemen, die zumindest
(I') mindestens eine, insbesondere eine, Komponente, die mindestens ein wasserlösliches und/oder wasserdispergierbares, oligomeres und/oder polymeres Bindemittel (A) mit mindestens zwei isocyanatreaktiven funktionellen Gruppen in mindestens einem organischen Lösemittel gelöst und/oder dispergiert enthält und im vorstehend genannten Sinne wasserfrei ist;
(II) mindestens eine, insbesondere eine, wasserfreie, flüssige Komponente, die mindestens ein Polyisocyanat (B) enthält oder hieraus besteht; und
(III) Wasser oder mindestens eine, insbesondere eine, wässrige Komponente, die mindestens ein Bindemittel (A) in Wasser dispergiert und/oder gelöst enthält;
ausgegangen.

Vorzugsweise werden an sich bekannte Mehrkomponentensysteme, insbesondere Dreikomponentensysteme oder Vierkomponentensysteme, eingesetzt, wie sie beispielsweise in der internationalen Patentanmeldung WO 97/14731 A1, den deutschen Patentanmeldungen DE 44 21 823 A1, DE 198 55 125 A1, DE 198 55 167 A1 oder DE 199 04 317 A1 oder in dem amerikanische Patent US 5,466,754 A1 im Detail beschrieben werden.

Erfindungsgemäß wird ein Teil mindestens einer, insbesondere einer, Komponente (III) mit mindestens einer, insbesondere einer, Komponente (I') vermischt wird, sodass mindestens eine, insbesondere eine, Wasser-in-Öl-Dispersion (I) resultiert, wie sie vorstehend beschrieben wird. Dabei wird die Menge an Komponente (III) so gewählt, dass es zu keiner Phaseninversion zu einer Öl-in-Wasser-Dispersion kommen kann. Dies kann auch im Rahmen des erfindungsgemäßen Verfahrens 2 durchgeführt werden.

Methodisch weist die Herstellung der Komponenten (I) bis (III), d. h. der erfindungsgemäßen Mehrkomponentensysteme, keine Besonderheiten auf, sondern erfolgt durch das Vermischen und Homogenisieren der vorstehend beschriebenen Bestandteile mit Hilfe üblicher und bekannter Mischverfahren und Vorrichtungen wie Rührkessel, Rührwerksmühlen, Extruder, Kneter, Ultraturrax, In-line-Dissolver, statische Mischer, Zahnkranzdispergatoren, Druckentspannungsdüsen und/oder Microfluidizer, gegebenenfalls unter Ausschluß von aktinischer Strahlung, sofern die resultierenden Komponenten (I) bis (III) Bestandteile enthalten, die durch aktinische Strahlung aktivierbar sind.

Die erfindungsgemäßen Mehrkomponentensysteme dienen der Herstellung der härtbaren Öl-in-Wasser-Dispersionen.

Vorzugsweise haben die härtbaren Öl-in-Wasser-Dispersionen einen Festkörpergehalt, d. h. einen Gehalt an Bestandteilen, die die aus den Mischungen hergestellten Beschichtungen, Klebschichten oder Dichtungen aufbauen, von 10 bis 90, bevorzugt 20 bis 80 und insbesondere 30 bis 70 Gew.-%, jeweils bezogen auf eine härtbare Öl-in-Wasser-Dispersion.

Vorzugsweise enthalten die härtbaren Öl-in-Wasser-Dispersionen, bezogen auf die Gesamtmenge des darin enthaltenen Wassers und der darin enthaltenen organischen Lösemittel, mehr als 50 Gew.-%, bevorzugt mindestens 55 Gew.-% und insbesondere mindestens 60 Gew.-% Wasser, sodass die Löslichkeitseigenschaften im Wesentlichen vom Wasser geprägt werden.

Die härtbaren Öl-in-Wasser-Dispersionen sind thermisch härtbar. Dies bedeutet, dass sie bei Raumtemperatur oder bei höheren Temperaturen gehärtet werden können. Dabei können die üblichen und bekannten Vorrichtungen, wie Umluftöfen, Heißluftgebläse oder Heizstrahler, insbesondere NIR- oder IR-Strahlen oder Mikrowellenstrahler, verwendet werden.

Die härtbaren Öl-in-Wasser-Dispersionen können auch thermisch und mit aktinischer Strahlung härtbar sein, was von der Fachwelt auch als Dual-Cure bezeichnet wird. Unter aktinischer Strahlung wird elektromagnetische Strahlung, wie nahes Infrarot (NIR), sichtbares Licht, UV-Strahlung, Röntgenstrahlung oder Gammastrahlung, insbesondere UV-Strahlung, und Korpuskularstrahlung, wie Elektronenstrahlung, Betastrahlung, Neutronenstrahlung, Protonenstrahlung oder Alphastrahlung, insbesondere Elektronenstrahlung, verstanden. Für die Härtung können die üblichen und bekannten Vorrichtungen, wie UV-Lampen oder Elektronenstrahlquellen eingesetzt werden (vgl. auch die deutsche Patentanmeldung DE 101 29 970 A1, Seite 13, Abs. [0132]).

Die Herstellung der härtbaren Öl-in-Wasser-Dispersionen erfolgt durch Vermischen zumindest der Komponenten (I) bis (III) der erfindungsgemäßen Mehrkomponentensysteme, vorzugsweise im Rahmen des erfindungsgemäßen Verfahrens 2, bei dem
(1) ein Teil mindestens der Komponente (III) mit mindestens einer Komponente (I') vermischt wird, sodass mindestens eine Wasser-in-Öl-Dispersion (I) resultiert,
(2) die Wasser-in-Öl-Dispersion(en) (I) mit mindestens einer Komponente (II) vermischt wird oder werden und
(3) die resultierende (n) Mischung(en) (I/II) mit Wasser oder mindestens einer Komponente (III) vermischt wird oder werden, sodass mindestens eine härtbare Öl-in-Wasser-Dispersion resultiert.

Vorzugsweise werden dabei die Mengen der Komponenten (I) und (II) so gewählt, dass ein Äquivalentverhältnis von Isocyanatgruppen zu isocyanatreaktiven Gruppen von 2 : 1 bis 1 : 2, bevorzugt 1,5 : 1 bis 1 : 1,5 und insbesondere 1,2 : 1 bis 1 : 1,2 resultiert. Bevorzugt wird oder werden im Rahmen des erfindungsgemäßen Verfahrens 2 die resultierende(n) Mischung(en) (I/II) rasch weiterverarbeitet.

Für das Vermischen können die vorstehend beschriebenen Mischaggregate eingesetzt werden. Es ist aber ein besonderer Vorteil der erfindungsgemäßen Mehrkomponentensysteme, des erfindungsgemäßen Verfahrens 1 und des erfindungsgemäßen Verfahrens 2, dass das Vermischen auch manuell erfolgen kann, ohne dass dadurch das anwendungstechnische Eigenschaftsprofil der härtbaren Wasser-in-Öl-Dispersionen nachteilig beeinflusst wird.

Insgesamt gestatten die erfindungsgemäßen Mehrkomponentensysteme, das erfindungsgemäße Verfahren 1 und das erfindungsgemäße Verfahren 2 die gezielte Herstellung kleiner Mengen an härtbaren Öl-in-Wasser-Dispersionen für die Lösung spezieller Probleme, beispielsweise die Reparaturlackierung kleiner Schäden an lackierten Substraten, wie Automobilkarosserien, das Verkleben kleiner Substrate oder die Herstellung kleiner Dichtungen.

Die in erfindungsgemäßer Weise hergestellten härtbaren Öl-in-Wasser-Dispersionen weisen eine Topfzeit oder Verarbeitungszeit von mehreren Stunden auf. Dies erleichtert den Anwendern die Arbeitsplanung in erheblichem Maße.

Sie können daher sehr breit eingesetzt werden. Insbesondere eignen sie sich als Beschichtungsstoffe, Klebstoffe und Dichtungsmassen für die Herstellung von Beschichtungen, Klebschichten Dichtungen mit hervorragenden Anwendung technischen Eigenschaften.

Insbesondere sind die Beschichtungsstoffe hervorragend zur Herstellung ein- und mehrschichtiger Klarlackierungen, sowie ein- und mehrschichtiger, farb- und/oder effektgebender, elektrisch leitfähiger, magnetisch abschirmender und/oder fluoreszierender Beschichtungen insbesondere nach dem Nass-in-nass-Verfahren geeignet bei dem ein pigmentierter Basislack, insbesondere ein Wasserbasislack, auf die Oberfläche eines Substrats appliziert wird, wonach man die resultierende Basislackschicht, ohne sie auszuhärten, trocknet und mit einer Klarlackschicht überschichtet. Anschließend werden die beiden Schichten gemeinsam gehärtet.

Die Applikation der mit Hilfe des erfindungsgemäßen Verfahrens hergestellten wässrigen, härtbaren Mischungen, insbesondere der Beschichtungsstoffe, Klebstoffe und Dichtungsmassen, weist keine methodischen Besonderheiten auf, sondern kann durch alle üblichen Applikationsmethoden, wie z.B. Spritzen, Rakeln, Streichen, Gießen, Tauchen, Träufeln oder Walzen erfolgen. Gegebenenfalls empfiehlt es sich, unter Ausschluss von aktinischer Strahlung zu arbeiten, um eine vorzeitige Vernetzung der wässrigen, härtbaren Mischungen, insbesondere der Beschichtungsstoffe, Klebstoffe und Dichtungsmassen zu vermeiden.

Die Beschichtungsstoffe, Klebstoffe und Dichtungsmassen können daher dem Beschichten, Verkleben und Abdichten von Substraten jeglicher Art, insbesondere von Karosserien von Fortbewegungsmitteln, inklusive mit Motorkraft und/oder Muskelkraft betriebene Fortbewegungsmittel, wie Personenkraftwagen, Nutzfahrzeuge, Omnibusse, Fahrräder, Schienenfahrzeugen, Wasserfahrzeuge und Fluggeräten, und Teilen hiervon, Bauwerken und Teilen hiervon, Türen, Fenster, Möbeln, industriellen Kleinteilen, mechanischen, optischen und elektronischen Bauteilen, Coils, Container, Emballagen, Glashohlkörpern und Gegenständen des täglichen Bedarfs, dienen.

### Beispiele

### Herstellbeispiel 1

### Die Herstellung der organischen Lösung eines wasserlöslichen oder wasserdispergierbaren Methacrylatcopolymerisats (A)

In einem Edelstahlreaktor, ausgerüstet mit Rührer, Rückflusskühler und drei Zulaufgefäßen, wurden 402,7 Gewichtsteile Ethylethoxypropionat vorgelegt und auf 130 °C erhitzt. Anschließend wurde bei dieser Temperatur der Vorlage unter Rühren während 2,5 Stunden aus dem ersten Zulaufgefäß eine Monomermischung aus 50 Gewichtsteilen Styrol, 20,5 Gewichtsteilen Methylmethacrylat, 26,6 Gewichtsteilen Laurylmethacrylat, 56,9 Gewichtsteilen Hydroxyethylacrylat, 41,4 Gewichtsteilen tert.-Butylacrylat und 46,1 Butylmethacrylat gleichmäßig zudosiert. Gleichzeitig wurde während 2,5 Stunden aus dem zweiten Zulaufgefäß eine Initiatorlösung aus 34,6 Gewichtsteilen Ethylethoxypropionat und 21,2 Gewichtsteilen tert.-Butylperoxyethylhexanoat gleichmäßig zudosiert. Das resultierende Reaktionsgemisch wurde während einer Stunde bei 130 °C gerührt.

Anschließend wurde aus dem dritten Zulaufgefäß bei dieser Temperatur der Vorlage unter Rühren während 1,5 Stunden eine Monomermischung aus 30 Gewichtsteilen Styrol, 12,3 Gewichtsteilen Methylmethacrylat, 16 Gewichtsteilen Laurylmethacrylat, 72,3 Gewichtsteilen Hydroxyethylacrylat, 27,6 Gewichtsteilen Butylmethacrylat, 24,9 Gewichtsteilen tert.-Butylacrylat und 18,3 Gewichtsteilen Acrylsäure gleichmäßig zudosiert. Gleichzeitig beginnend wurde aus dem zweiten Zulaufgefäß während 2 Stunden eine Initiatorlösung aus 25,7 Gewichtsteilen Ethylethoxypropionat und 15,7 Gewichtsteilen tert.-Butylperoxyethylhexanoat gleichmäßig zudosiert.

Das resultierende Reaktionsgemisch wurde während 2 Stunden bei 130 °C gerührt. Anschließend wurde bei 100 °C das Ethylethoxypropionat unter Vakuum abdestilliert, bis ein Festkörpergehalt von 80 Gew.-% erreicht war. Nach Zugabe von 40,2 Gewichtsteilen Butylglykol bei 60 °C wurde mit Ethylethoxypropionat ein Festkörpergehalt von 75 Gew.-% eingestellt. Das Methacrylatcopolymerisat (A) wies eine Säurezahl von 30 mg KOH/g Festharz und eine Viskosität von 3,5 dPas (55-prozentig in Ethylethoxypropionat bei 23 °C) auf.

Das Methacrylatcopolymerisat (A) diente der Herstellung der Komponente (I).

### Herstellbeispiel 2

### Die Herstellung der wässrigen Dispersion eines wasserlöslichen oder wasserdispergierbaren Polyurethans (A)

In einem für Polykondensationsreaktionen geeigneten Edelstahlreaktor wurden 297,2 Gewichtsteile Hydroxypivalinsäureneopentylglykolester, 32,8 Gewichtsteile Phthalsäureanhydrid, 5,7 Gewichtsteile 2-Butyl-2-ethylpropandiol-1,3, 133,5 Gewichtsteile Neopentylglykol und 346,4 Gewichtsteile Isophthalsäure sowie 11,2 Gewichtsteile Schleppmittel eingewogen. Anschließend wurde das Reaktionsgemisch unter Rühren erhitzt, wobei das Kondensationswasser kontinuierlich entfernt wurde, bis eine Säurezahl von 3,5 mg KOH/g erreicht war. Der resultierende Polyester wurde auf 60 °C abgekühlt und mit Methylethylketon auf einen Festkörpergehalt von 80 Gew.-% eingestellt. Die Viskosität des Polyesters lag bei 3,5 dPas (60-prozentig in Ethylethoxypropionat bei 23 °C).

In einem für die Polyurethansynthese geeigneten Edelstahlreaktor wurden 264,7 Gewichtsteile des Polyesters, 2,3 Gewichtsteile 2-Butyl-2-ethylpropandiol-1,3, 24,4 Gewichtsteile Dimethylolpropionsäure und 112,4 Gewichtsteile m-Tetramethylxylylidendiisocyanat (TMXDI) vorgelegt und bei 82 °C bis zu einem konstanten Isocyanatgehalt umgesetzt. Anschließend wurde 36,2 Gewichtsteile Trimethylolpropan hinzugegeben, wonach das Reaktionsgemisch bis zur Beendigung der Reaktion weiter erhitzt wurde. Nach der Zugabe von 44,5 Gewichtsteilen Methylethylketon wurde das Reaktionsgemisch mit 13 Gewichtsteilen Dimethylethanolamin neutralisiert und in 480 Gewichtsteilen 60 °C warmem, deionisiertem Wasser dispergiert. Anschließend wurde das Methylethylketon im Vakuum abdestilliert. Die Polyurethandispersion (A) wurde mit deionisiertem Wasser auf einen Festkörpergehalt von 40 Gew.-% eingestellt. Sie wies eine Säurezahl von 30 mg KOH/g Festharz und einen pH-Wert von 7,2 auf.

Die wässrige Dispersion des Polyurethans (A) diente der Herstellung der Komponente (III).

### Herstellbeispiel 3

### Die Herstellung einer Dispersion eines wasserlöslichen oder wasserdispergierbaren Methacrylatcopolymerisats (A)

In einem Edelstahlreaktor, ausgerüstet mit Rührer, Rückflusskühler und drei Zulaufgefäßen wurden 94 Gewichtsteile Methylisobutylketon vorgelegt und auf 110 °C erhitzt. Anschließend wurde bei dieser Temperatur der Vorlage aus dem ersten Zulaufgefäß während drei Stunden eine Monomermischung aus 32,9 Gewichtsteilen Styrol, 38,3 Gewichtsteilen Methylmethacrylat, 22 Gewichtsteilen Laurylmethacrylat, 49,5 Gewichtsteilen Hydroxethylmethacrylat und 43,9 Gewichststeilen Butylmethacrylat gleichmäßig zudosiert. Gleichzeitig beginnend wurde aus dem zweiten Zulaufgefäß während drei Stunden einen Initiatorlösung aus 25,8 Gewichtsteilen Methylisobutylketon und 11,3 Gewichtsteilen tert.-Butylperoxyethylhexanoat gleichmäßig zudosiert. Das resultierende Reaktionsgemisch wurde während einer Stunde bei 110°C gerührt.

Anschließend wurde bei dieser Temperatur der Vorlage aus dem dritten Zulaufgefäß während 1,5 Stunden eine Monomermischung aus 14,1 Gewichtsteilen Styrol, 16,4 Gewichtsteilen Methylmethacrylat, 9,4 Gewichtsteilen Laurylmethacrylat, 52,4 Gewichtsteilen Hydroxyethylmethacrylat, 18,8 Gewichtsteilen Butylmethacrylat und 15,9 Gewichtsteilen Acrylsäure zudosiert. Gleichzeitig beginnend wurde aus dem zweiten Zulauf während 2 Stunden eine Initiatorlösung aus 16,6 Gewichtsteilen Methylisobutylketon und 7,5 Gewichtsteilen tert.-Butylperoxyethylhexanoat gleichmäßig zudosiert. Das resultierende Reaktionsgemisch wurde während zwei Stunden bei 110 °C gehalten und anschließend mit 17,5 Gewichtsteilen Dimethylethanolamin versetzt.

Anschließend wurde das Reaktionsgemisch bei 80 °C in 149,5 Gewichtsteilen deionisiertem Wasser dispergiert. Die resultierende Dispersion wurde während einer Stunde bei 80 °C gehalten. Es wurden 330 Gewichtsteile deionisiertes Wasser zugesetzt, und das Methylisobutylketon wurde im Vakuum abdestilliert.

Die resultierende Dispersion des Methacrylatcopolymerisats (A) wurde mit deionisiertem Wasser auf einen Festkörpergehalt von 40 Gew.-% eingestellt. Sie wies einen pH-Wert von 7,5 und eine Säurezahl von 40 mg KOH/g Festharz auf.

Die Dispersion des Methacrylatcopolymerisats (A) diente der Herstellung der Komponente (III).

### Herstellbeispiel 4

### Die Herstellung eines niedermolekularen, hydrophoben Polyesters

In einem Edelstahlreaktor wurden 308 Gewichtsteile Hexahydrophtalsäureanhydrid und 134 Gewichtsteile Trimethylolpropan eingewogen und auf 150 °C erhitzt. Anschließend wurden zur Vorlage während einer Stunde 457 Gewichtsteile Cardura ® E 10 (Versaticsäure ®-Glycidylester) gleichmäßig zudosiert. Das Reaktionsgemisch wurde bei 150 °C gehalten, bis eine Säurezahl < 3 mg KOH/g erreicht war, und anschließend bei 120 °C mit Butylglykolacetat auf einen Festkörpergehalt von 80 Gew.-% angelöst. Die Viskosität der Lösung betrug 28 dPas (23 °C).

Der niedermolekulare, hydrophobe Polyester diente der Herstellung der Komponente (I).

### Herstellbeispiel 5

### Die Herstellung der Komponente (II)

Die Komponente (II) wurde durch Vermischen von 70 Gewichtsteilen eines Trimeren von Hexamethylendiisocyanat (Desmodur ® XP 2410 der Firma Bayer AG) und 30 Gewichtsteilen Butylglykolacetat und Homogenisieren der resultierenden Mischung in einem Rührgefäß hergestellt.

### Herstellbeispiel 6

### Die Herstellung der Komponente (III)

Die Komponente (III) wurde durch Vermischen der nachfolgend beschriebenen Bestandteile in der angegebene Reihenfolge und Homogenisieren der resultierenden Mischung in einem Rührgefäß mit einem Rührer hergestellt:
- 33,9 Gewichtsteile deionisiertes Wasser,
- 0,4 Gewichtsteile eines handelsüblichen Rheologiehilfsmittels (Dapral ® T 210),
- 20 Gewichtsteile der Dispersion des wasserlöslichen oder wasserdispergierbaren Methacrylatcopolymerisats (A) gemäß Herstellbeispiel 3,
- 44 Gewichtsteile der Dispersion des wasserlöslichen oder wasserdispergierbaren Polyurethans (A) gemäß Herstellbeispiel 2,
- 0,2 Gewichtsteile Dimethylethanolamin und
- 1,5 Gewichtsteile Butylglykol.

### Beispiel 1

### Die Herstellung einer härtbaren Öl-in-Wasser-Dispersion (Klarlack) unter Verwendung eines Mehrkomponentensystems

Es wurde zunächst eine Wasser-in-ÖI-Dispersion oder Komponente (I) durch Vermischen der nachfolgend beschriebenen Bestandteile in der angegebene Reihenfolge und Homogenisieren der resultierenden Mischung in einem Rührgefäß mit einem Rührer hergestellt:
- 52 Gewichtsteile der organischen Lösung des wasserlöslichen oder wasserdispergierbaren Methacrylatcopolymerisats (A) gemäß Herstellbeispiel 1,
- 17,5 Gewichtsteile des niedermolekularen, hydrophoben Polyesters gemäß Herstellbeispiel 4,
- 8,3 Gewichtsteile Butylglykolacetat,
- 2 Gewichtsteile Butylglykol,
- 6 Gewichtsteile eines handelsüblichen Benetzungmittels (Deuterol ® 201E),
- 1 Gewichtsteil eines handelsüblichen Verlaufmittels auf der Basis eines polyethermodifizierten Dimethylsiloxan-Copolymerisats (Byk ® 331 der Firma Byk Chemie),
- 0,7 Gewichtsteile eines handelsüblichen Lichtschutzmittels auf der Basis von sterisch gehinderten Aminen (HALS) (Tinuvin ® 292 der Firma Ciba Specialty Chemicals),
- 0,7 Gewichtsteile eines handelsüblichen UV-Absorbers (Tinuvin ® 1130 der Firma Ciba Specialty Chemicals),
- 1,8 Gewichtsteile Dimethylethanolamin und
- 10 Gewichtsteile deionisiertes Wasser.

Die Wasser-in-Öl-Dispersion (I) war transportfähig und lagerstabil.

Zur Herstellung der Wasser-in-Öl-Dispersion (I/II) wurden 25 Gewichtsteile der Komponente (II) zu 25 Gewichtsteilen der Wasser-in-Öl-Dispersion (I) gegeben. Das Vermischen erfolgte manuell.

Zur Herstellung der Öl-in-Wasser-Dispersion bzw. des Klarlacks wurde die Wasser-in-Öl-Dispersion (I/II) mit 50 Gewichtsteilen der Komponente (III) manuell vermischt. Der Klarlack wurde mit 25 Gewichtsteilen deionisiertem Wasser manuell auf die Spritzviskosität eingestellt. Er wies eine Verarbeitungszeit von mehreren Stunden auf und war problemlos applizierbar.

### Beispiel 2

### Die Herstellung einer härtbaren Öl-in-Wasser-Dispersion (Klarlack) unter Verwendung eines Mehrkomponentensystems

Es wurde zunächst eine Wasser-in-Öl-Dispersion (I) durch Vermischen der nachfolgend beschriebenen Bestandteile in der angegebene Reihenfolge und Homogenisieren der resultierenden Mischung in einem Rührgefäß mit einem Rührer hergestellt:
- 48 Gewichtsteile der organischen Lösung des wasserlöslichen oder wasserdispergierbaren Methacrylatcopolymerisats (A) gemäß Herstellbeispiel 1,
- 17,5 Gewichtsteile des niedermolekularen, hydrophoben Polyesters gemäß Herstellbeispiel 4,
- 8,3 Gewichtsteile Butylglykolacetat,
- 2 Gewichtsteile Butylglykol,
- 6 Gewichtsteile eines handelsüblichen Benetzungmittels (Deuterol ® 201 E),
- 1 Gewichtsteil eines handelsüblichen Verlaufmittels auf der Basis eines polyethermodifizierten Dimethylsiloxan-Copolymerisats (Byk ® 331 der Firma Byk Chemie),
- 0,7 Gewichtsteile eines handelsüblichen Lichtschutzmittels auf der Basis von sterisch gehinderten Aminen (HALS) (Tinuvin ® 292 der Firma Ciba Specialty Chemicals),
- 0,7 Gewichtsteile eines handelsüblichen UV-Absorbers (Tinuvin ® 1130 der Firma Ciba Specialty Chemicals),
- 1,8 Gewichtsteile Dimethylethanolamin und
- 14 Gewichtsteile der Komponente (III) gemäß Herstellbeispiel 6.

Die Wasser-in-Öl-Dispersion (I) war transportfähig und lagerstabil.

Zur Herstellung der Mischung bzw. der Wasser-in-Öl-Dispersion (I/II) wurden 25 Gewichtsteile der Komponente (II) zu 25 Gewichtsteilen der Wasser-in-Öl-Dispersion (I) gegeben. Das Vermischen erfolgte manuell.

Zur Herstellung der Öl-in-Wasser-Dispersion bzw. des Klarlacks wurde die Wasser-in-Öl-Dispersion (I/II) mit 50 Gewichtsteilen der Komponente (III) manuell vermischt. Der Klarlack wurde mit 25 Gewichtsteilen deionisiertem Wasser manuell auf die Spritzviskosität eingestellt. Er wies eine Verarbeitungszeit von mehreren Stunden auf und war problemlos applizierbar.

### Beispiele 3 und 4

### Die Herstellung von Mehrschichtlackierungen

Für die Herstellung der Mehrschichtlackierung des Beispiels 3 wurde der Klarlack des Beispiels 1 verwendet. Für die Herstellung der Mehrschichtlackierung des Beispiels 4 wurde der Klarlack des Beispiels 2 verwendet.

Handelsübliche phosphatierte Stahlbleche, die mit einer Elektrotauchlackierung und einer Füllerlackierung beschichtet waren, wurden mit einem üblichen und bekannten, schwarze Wasserbasislack gemäß der europäischen Patentanmeldung EP 0 279 813 A1 beschichtet. Die resultierenden Wasserbasislackschichten wurden während fünf Minuten bei Raumtemperatur abgelüftet und während zehn Minuten bei 60 °C getrocknet. Die getrockneten Wasserbasislackschichten wurden in zwei Spritzgängen mit drei bis vier Minuten Zwischenablüftzeit mit den Klarlacken beschichtet. Die resultierenden Klarlackschichten wurden während zehn Minuten bei Raumtemperatur abgelüftet und während 45 Minuten bei 60 °C im Umluftofen getrocknet. Die resultierenden Mehrschichtlackierungen wiesen Basislackierungen einer Trockenschichtdicke von 12 bis 15 µm und Klarlackierungen einer Trockenschichtdicke von 50 µm auf.

Die Klarlackierungen waren klar und frei von Trübungen und Oberflächenstörungen wie Mikrobläschen und Krater. Sie wiesen eine sehr gute Benetzung und einen sehr guten Verlauf auf. Der optische Gesamteindruck (visuell) war hervorragend. Der Glanz (20°) und Haze nach DIN 67530 lagen bei 87 und 11,4 Einheiten (Beispiel 3) bzw. 88 und 10,9 Einheiten (Beispiel 4).

## Patentansprüche

1. Mehrkomponentensysteme, die mindestens die folgenden Komponenten enthalten oder hieraus bestehen:
(I) mindestens eine Wasser-in-Öl-Dispersion, die Wasser und mindestens ein wasserlösliches und/oder wasserdispergierbares, oligomeres und/oder polymeres Bindemittel (A) mit mindestens zwei isocyanatreaktiven funktionellen Gruppen in mindestens einem organischen Lösemittel gelöst und/oder dispergiert enthält;
(II) mindestens eine wasserfreie, flüssige Komponente, die mindestens ein Polyisocyanat (B) enthält oder hieraus besteht; und
(III) Wasser oder mindestens eine wässrige Komponente, die mindestens ein Bindemittel (A) in Wasser dispergiert und/oder gelöst enthält.

2. Mehrkomponentensysteme nach Anspruch 1, **dadurch gekennzeichnet, dass** die Wasser-in-Öl-Dispersion (I) einen Wassergehalt < 40 Gew.-% hat.

3. Verfahren zur Herstellung von Mehrkomponentensystemen gemäß Anspruch 1 oder 2 aus Mehrkomponentensystemen, die zumindest
(I') mindestens eine wasserfreie, flüssige Komponente, die mindestens ein wasserlösliches und/oder wasserdispergierbares, oligomeres und/oder polymeres Bindemittel (A) mit mindestens zwei isocyanatreaktiven funktionellen Gruppen in mindestens einem organischen Lösemittel gelöst und/oder dispergiert enthält;
(II) mindestens eine wasserfreie, flüssige Komponente, die mindestens ein Polyisocyanat (B) enthält oder hieraus besteht; und
(III) Wasser oder mindestens eine wässrige Komponente, die mindestens ein Bindemittel (A) in Wasser dispergiert und/oder gelöst enthält;
umfassen, **dadurch gekennzeichnet, dass** ein Teil mindestens einer Komponente (III) mit mindestens einer Komponente (I') vermischt wird, sodass mindestens eine Wasser-in-Öl-Dispersion (I) resultiert.

4. Verfahren nach Anspruch 3, **dadurch gekennzeichnet, dass** ein Teil mindestens einer Komponente (III) mit mindestens einer Komponente (I') ohne Mischaggregate vermischt wird.

5. Verfahren zur Herstellung thermisch oder thermisch und mit aktinischer Strahlung härtbarer Öl-in-Wasser-Dispersionen, bei dem ein Mehrkomponentensystem, das mindestens die folgenden Komponenten enthält oder hieraus besteht:
(I') mindestens eine wasserfreie, flüssige Komponente, die mindestens ein wasserlösliches und/oder wasserdispergierbares, oligomeres und/oder polymeres Bindemittel (A) mit mindestens zwei isocyanatreaktiven funktionellen Gruppen in mindestens einem organischen Lösemittel gelöst und/oder dispergiert enthält;
(II) mindestens eine wasserfreie, flüssige Komponente, die mindestens ein Polyisocyanat (B) enthält oder hieraus besteht; und
(III) Wasser oder mindestens eine wässrige Komponente, die mindestens ein Bindemittel (A) in Wasser dispergiert und/oder gelöst enthält;
verwendet wird, wobei mindestens eine Komponente (I'), mindestens eine Komponente (II) und mindestens eine Komponente (III) miteinander vermischt werden, **dadurch gekennzeichnet, dass**
(1) ein Teil mindestens einer Komponente (III) mit mindestens einer Komponente (I') vermischt wird, sodass mindestens eine Wasser-in-Öl-Dispersion (I) resultiert,
(2) die Wasser-in-Öl-Dispersion(en) (I) mit mindestens einer Komponente (II) vermischt wird oder werden und
(3) die resultierende(n) Mischung(en) (I/II) mit Wasser oder mindestens einer Komponente (III) vermischt wird oder werden, sodass mindestens eine Öl-in-Wasser-Dispersion resultiert.

6. Verfahren nach Anspruch 5, **dadurch gekennzeichnet, dass** die Wasser-in-Öl-Dispersion (I) einen Wassergehalt < 40 Gew.-% hat.

7. Verfahren nach Anspruch 5 oder 6, **dadurch gekennzeichnet, dass** die Mischungen (I/II) Wasser-in-Öl-Dispersionen sind.

8. Verfahren nach einem der Ansprüche 5 bis 7, **dadurch gekennzeichnet, dass** der Verfahrenschritt (2) ohne Mischaggregate durchgeführt wird.

9. Verfahren nach einem der Ansprüche 5 bis 8, **dadurch gekennzeichnet, dass** der Verfahrenschritt (3) ohne Mischaggregate durchgeführt wird.

10. Verwendung der nach dem Verfahren gemäß einem der Ansprüche 5 bis 9 hergestellten, thermisch oder thermisch und mit aktinischer Strahlung härtbaren Öl-in-Wasser-Dispersionen als Beschichtungsstoffe, Klebstoffe und Dichtungsmassen für die Herstellung von Beschichtungen, Klebschichten und Dichtungen.

11. Verwendung der Mehrkomponentensysteme gemäß Anspruch 1 oder 2 und der nach dem Verfahren gemäß Anspruch 3 oder 4 hergestellten Mehrkomponentensysteme für die Herstellung von thermisch oder thermisch und mit aktinischer Strahlung härtbaren Öl-in-Wasser-Dispersionen.

12. Verwendung nach Anspruch 11, **dadurch gekennzeichnet, dass** thermisch oder thermisch und mit aktinischer Strahlung härtbaren Öl-in-Wasser-Dispersionen als Beschichtungsstoffe, Klebstoffe und Dichtungsmassen für die Herstellung von Beschichtungen, Klebschichten und Dichtungen verwendet werden.

13. Verwendung nach einem der Ansprüche 10 bis 12, **dadurch gekennzeichnet, dass** die Beschichtungsstoffe Klarlacke sind, die der Herstellung von Klarlackierungen dienen.

14. Verwendung nach einem der Ansprüche 10 bis 13, **dadurch gekennzeichnet, dass** die Beschichtungsstoffe, Klebstoffe und Dichtungsmassen dem Beschichten, Verkleben und Abdichten von Karosserien von Fortbewegungsmitteln, inklusive mit Motorkraft und/oder Muskelkraft betriebene Fortbewegungsmittel, wie Personenkraftwagen, Nutzfahrzeuge, Omnibusse, Fahrräder, Schienenfahrzeugen, Wasserfahrzeuge und Fluggeräten, und Teilen hiervon, Bauwerken und Teilen hiervon, Türen, Fenster, Möbeln, industriellen Kleinteilen, mechanischen, optischen und elektronischen Bauteilen, Coils, Container, Emballagen, Glashohlkörpern und Gegenständen des täglichen Bedarfs, dienen.

## Claims

1. Multicomponent systems which consist of or comprise at least the following components:
(I) at least one water-in-oil dispersion comprising water and at least one water-soluble and/or water-dispersible, oligomeric and/or polymeric binder (A) having at least two isocyanate-reactive functional groups in solution and/or dispersion in at least one organic solvent;
(II) at least one water-free liquid component which consists of or comprises at least one polyisocyanate (B); and
(III) water or at least one aqueous component which comprises at least one binder (A) in dispersion and/or solution in water.

2. Multicomponent systems according to Claim 1, **characterized in that** the water-in-oil dispersion (I) has a water content < 40% by weight.

3. Process for preparing multicomponent systems according to Claim 1 or 2 from multicomponent systems which comprise at least
(I') at least one water-free liquid component which comprises at least one water-soluble and/or water-dispersible, oligomeric and/or polymeric binder (A) having at least two isocyanate-reactive functional groups in solution and/or dispersion in at least one organic solvent;
(II) at least one water-free liquid component which consists of or comprises at least one polyisocyanate (B); and
(III) water or at least one aqueous component which comprises at least one binder (A) in dispersion and/or solution in water;
**characterized in that** a portion of at least one component (III) is mixed with at least one component (I') to give at least one water-in-oil dispersion (I).

4. Process according to Claim 3, **characterized in that** a portion of at least one component (III) is mixed, without mixing units, with at least one component (I').

5. Process for preparing oil-in-water dispersions curable thermally or both thermally and with actinic radiation, which comprises using a multicomponent system which consists of or comprises at least the following components:
(I') at least one water-free liquid component which comprises at least one water-soluble and/or water-dispersible, oligomeric and/or polymeric binder (A) having at least two isocyanate-reactive functional groups in solution and/or dispersion in at least one organic solvent;
(II) at least one water-free liquid component which consists of or comprises at least one polyisocyanate (B); and
(III) water or at least one aqueous component which comprises at least one binder (A) in dispersion and/or solution in water;
where at least one component (I'), at least one component (II), and at least one component (III) are mixed with one another, **characterized in that**
(1) a portion of at least one component (III) is mixed with at least one component (I') to give at least one water-in-oil dispersion (I),
(2) the water-in-oil dispersion(s) (I) is or are mixed with at least one component (II), and
(3) the resultant mixture(s) (I/II) is or are mixed with water or at least one component (III) to give at least one oil-in-water dispersion.

6. Process according to Claim 5, **characterized in that** the water-in-oil dispersion (I) has a water content < 40% by weight.

7. Process according to Claim 5 or 6, **characterized in that** the mixtures (I/II) are water-in-oil dispersions.

8. Process according to one of Claims 5 to 7, **characterized in that** the process step (2) is carried out without mixing units.

9. Process according to one of Claims 5 to 8, **characterized in that** the process step (3) is carried out without mixing units.

10. Use of the oil-in-water dispersions curable thermally or both thermally and with actinic radiation and prepared by the process according to any one of Claims 5 to 9 as coating materials, adhesives and sealants for producing coatings, adhesive layers and seals.

11. Use of the multicomponent systems according to Claim 1 or 2 and of the multicomponent systems prepared by the process according to Claim 3 or 4 for preparing oil-in-water dispersions curable thermally or both thermally and with actinic radiation.

12. Use according to Claim 11, **characterized in that** oil-in-water dispersions curable thermally or both thermally and with actinic radiation are used as coating materials, adhesives and sealants for producing coatings, adhesive layers and seals.

13. Use according to one of Claims 10 to 12, **characterized in that** the coating materials are clearcoat materials used for producing clearcoats.

14. Use according to one of Claims 10 to 13, **characterized in that** the coating materials, adhesives and sealants are used for the coating, adhesive bonding and sealing of bodies of means of transport, including means of transport operated by engine power and/or muscle power, such as automobiles, trucks, buses, bicycles, rail vehicles, watercraft and aircraft, and parts thereof, constructions and parts thereof, doors, windows, furniture, small industrial parts, mechanical, optical, and electronic components, coils, containers, packaging, hollow glassware, and articles of everyday use.

## Revendications

1. Systèmes multicomposants qui contiennent ou consistent en au moins les composants suivants :
(I) au moins une dispersion eau-dans-huile, qui contient de l'eau et au moins un liant oligomère et/ou polymère (A) soluble dans l'eau et/ou dispersable dans l'eau, comportant au moins deux groupes fonctionnels réactifs avec des isocyanates, dissous et/ou dispersé dans au moins un solvant organique ;
(II) au moins un composant liquide anhydre qui contient ou consiste en au moins un polyisocyanate (B) ; et
(III) de l'eau ou au moins un composant aqueux, qui contient au moins un liant (A) dispersé et/ou dissous dans l'eau.

2. Systèmes multicomposants selon la revendication 1, **caractérisés en ce que** la dispersion eau-dans-huile (I) a une teneur en eau < 40 % en poids.

3. Procédé pour la préparation de systèmes multicomposants selon la revendication 1 ou 2, à partir de systèmes multicomposants qui comprennent au moins
(I') au moins un composant liquide anhydre qui contient au moins un liant oligomère et/ou polymère (A) soluble dans l'eau et/ou dispersable dans l'eau, comportant au moins deux groupes fonctionnels réactifs avec des isocyanates, dissous et/ou dispersé dans au moins un solvant organique ;
(II) au moins un composant liquide anhydre qui contient ou consiste en au moins un polyisocyanate (B) ; et
(III) de l'eau ou au moins un composant aqueux, qui contient au moins un liant (A) dispersé et/ou dissous dans l'eau ;
**caractérisé en ce qu'**on mélange une partie d'au moins un composant (III) avec au moins un composant (I'), de sorte qu'il en résulte au moins une dispersion eau-dans-huile (I).

4. Procédé selon la revendication 3, **caractérisé en ce qu'**on mélange sans appareils de mélange une partie d'au moins un composant (III) avec au moins un composant (I').

5. Procédé pour la préparation de dispersions huile-dans-eau durcissables thermiquement ou thermiquement et par un rayonnement actinique, dans lequel on utilise un système multicomposant qui contient ou consiste en au moins les composants suivants :
(I') au moins un composant liquide anhydre qui contient au moins un liant oligomère et/ou polymère (A) soluble dans l'eau et/ou dispersable dans l'eau, comportant au moins deux groupes fonctionnels réactifs avec des isocyanates, dissous et/ou dispersé dans au moins un solvant organique ;
(II) au moins un composant liquide anhydre qui contient ou consiste en au moins un polyisocyanate (B) ; et
(III) de l'eau ou au moins un composant aqueux, qui contient au moins un liant (A) dispersé et/ou dissous dans l'eau ;
dans lequel on mélange entre eux au moins un composant (I'), au moins un composant (II) et au moins un composant (III), **caractérisé en ce que**
(1) on mélange une partie d'au moins un composant (III) avec au moins un composant (I'), de sorte qu'il en résulte au moins une dispersion eau-dans-huile (I)
(2) on mélange la/les dispersion(s) eau-dans-huile (I) avec au moins un composant (II) et
(3) on mélange le(s) mélange(s) (I/II) résultant(s) avec de l'eau ou au moins un composant (III), de sorte qu'il en résulte au moins une dispersion huile-dans-eau.

6. Procédé selon la revendication 5, **caractérisé en ce que** la dispersion eau-dans-huile (I) a une teneur en eau < 40 % en poids.

7. Procédé selon la revendication 5 ou 6, **caractérisé en ce que** les mélanges (I/II) sont des dispersions eau-dans-huile.

8. Procédé selon l'une quelconque des revendications 5 à 7, **caractérisé en ce qu'**on effectue l'étape (2) du procédé sans appareils de mélange.

9. Procédé selon l'une quelconque des revendications 5 à 8, **caractérisé en ce qu'**on effectue l'étape (3) du procédé sans appareils de mélange.

10. Utilisation des dispersions huile-dans-eau durcissables thermiquement ou thermiquement et par un rayonnement actinique, préparées conformément au procédé selon l'une quelconque des revendications 5 à 9, en tant que matières de revêtement, adhésifs et matières d'étanchéité, pour la production de revêtements, de couches de colle et de joints d'étanchéité.

11. Utilisation des systèmes multicomposants selon la revendication 1 ou 2 et des systèmes multicomposants préparés conformément au procédé selon la revendication 3 ou 4, pour la préparation de dispersions huile-dans-eau durcissables thermiquement ou thermiquement et par un rayonnement actinique.

12. Utilisation selon la revendication 11, **caractérisée en ce qu'**on utilise des dispersions huile-dans-eau durcissables thermiquement ou thermiquement et par un rayonnement actinique en tant que matières de revêtement, adhésifs et matières d'étanchéité, pour la production de revêtements, de couches de colle et de joints d'étanchéité.

13. Utilisation selon l'une quelconque des revendications 10 à 12, **caractérisée en ce que** les matières de revêtement sont des vernis qui servent à la production de revêtements de vernis.

14. Utilisation selon l'une quelconque des revendications 10 à 13, **caractérisée en ce que** les matières de revêtement, colles et matières d'étanchéité servent au revêtement, au collage ou à l'étanchéification de carrosseries de moyens de transport, y compris de moyens de transport actionnés par la force d'un moteur et/ou la force musculaire, tels que des automobiles, véhicules utilitaires, omnibus, bicyclettes, véhicules sur rail, véhicules aquatiques et aéronefs, et des pièces de ceux-ci, des bâtiments et des parties de ceux-ci, des portes, fenêtres, meubles, des petites pièces industrielles, des composants mécaniques, optiques et électroniques, des rubans continus, des récipients, des emballages, des articles creux en verre et des objets d'usage courant.
